# EUROPEAN PATENT APPLICATION

(11) **EP 1 668 991 A1**
(43) Date of publication of application: **14.06.2006**
(21) Application number: 04788247.7
(22) Date of filing: 28.09.2004
(51) Int. Cl.: A23G 1/00, A23D 9/00, A21D 2/16

(54) **OILY FOOD MATERIAL FOR HEATING INCLUDING BAKING**

(30) Priority: 30.09.2003 JP 2003341452
(71) Applicant: Fuji Oil Company, Ltd., Osaka-shi, Osaka 542-0086 (JP)
(72) Inventor: NAKATA, Michiko, c/o Fuji Oil Company, Limited, Tsukuba-gun, Ibaraki 300-2436 (JP); MORIKAWA, Kazutoshi, c/o Fuji Oil Company, Limited, Tsukuba-gun, Ibaraki 300-2436 (JP)
(74) Representative: Hayes, Adrian Chetwynd
(86) International application number: PCT/JP2004/014180
(87) International publication number: WO 2005/029970

(57) **Abstract**

It is intended to provide an oily food material shaped into chips or chunks to be blended into dough for baked goods or breads followed by heating such as baking, the surface of which quickly solidifies after baking, so that the baked product does not stick to a bag even in the case of being bagged immediately after the baking. Namely, an oily food material containing not more than 0.2% of lecithin or being free from lecithin is provided.

## Description

### Technical Field

The present invention relates to oily food materials whose surfaces quickly solidify after baking when they are heated such as baked.

### Background Art

There are traditionally food products which are prepared by blending or embedding a chip- or chunk-shaped oily food material, such as a chocolate material, into dough for baked goods or breads and then heating, such as baking, the dough.

The oily food materials easily melt and cannot quickly solidify when they are heated. Especially, the parts exposed on the surface of baked goods or breads are still in a melted state immediately after baking. If the melted parts of the oily food material slowly solidify, the parts, which are not yet dried, stick to packages when the baked goods or breads are bagged, or stick to hands or clothes when the baked goods or breads are eaten, thus resulting in a remarkable reduction in the commercial value. (Hereinafter, a state in which an oily food material does not solidify and is sticky may be referred to as an "undried" state, and a state in which it solidifies may be referred to as a "dried" state.)

In order to solidify oily food materials to the extent that they do not stick to packages, a manufacturing line for food products additionally needs a cooling step or the like, which is disadvantageous from the viewpoint of cost and equipment.

For the reasons mentioned above, there is a great demand in the market for improvement of dryness of oily food materials and prevention of sticking of oily food materials to packages.

On the other hand, imparting "baking resistance" to oily food materials has been studied with the aim of making some frame structure in the materials by heating and thereby preventing the deformation of the materials.

For example, JP-A 7-274808 (p.1-5) proposes a method for keeping a core material in its original shape in a baked bread without the melting and leaking of the core material due to the temperature and moisture applied during a bread-making process, which comprises coating a watersoluble or oil-soluble substance which is solid at ordinary temperature with a fat, wax or the like. The coating agents, however, negatively affect flavor, and the addition of a coating step with the coating agent leads to an increase in the number of steps; that is, the expected effect cannot be attained by a simple method.

Alternately, a method for providing the shape retention property to an oily food material when it is baked, which comprises adding an edible substance to the oily food material is proposed. The edible substance includes various substances, for example starch (for example, see JP-A 62-122557, p.1-4). However, the edible substance gives the feeling of a foreign object and affects the melting of an oily food material in the mouth. Moreover, the addition of the edible substance can prevent an oily food material from melting and leaking and keep the shape retention, that is, it has an effect of giving the "baking resistance", but whether the surface of the oily food material can dry immediately after baking is a different story, and this is not considered in the method.

It is known that the surface for an oily confectionary material is made to absorb moisture to generate the baking resistance (for an example, see JP-A 2001-245594, p.1-4). However, this method cannot be suitably applied to the present invention in which an oily food material is combined with dough for breads or the like.

As mentioned above, there are various inventions concerning the "baking resistance". However, there is no invention that has attained "drying" quickly after heating.

### Disclosure of Invention

### Problem to be solved by the Invention

An object of the present invention is to provide an oily food material whose surface dries easily, that is, when the oily food material itself (in the state as it is just after removing from a mold) or the chip-shaped or chunk-shaped oily food material is blended into dough for baked goods or breads and then baked, the parts of the oily food material exposed on the surface of the baked goods or breads can dry immediately after baking, whereby there is no need to worry about the sticking of the parts of an oily food material to a bag, even if the baked goods or breads are packed in bags at an early stage after baking.

### Means for Solving the Problem

In order to achieve the above-mentioned object, the present inventors studied intensively. As a result, they found that when a chocolate containing lecithin in a smaller amount than that used in the usual oily food material, for example, not more than 0.2% by weight of lecithin, and preferably, hardly any amount of lecithin was used, the surface of the chocolate dried immediately after baking and it did not dirty bags, and then completed the present invention.

That is, the present invention provides (1) an oily food material for heating including baking which contains not more than 0.2% by weight of lecithin.

The oily material (2) can have a water content of not more than 0.6% by weight at a stage before heating including baking; and is usually (3) the oily food material according to the above (1) which comprises fat and/or oil and sugar as essential components and typically (4) a chocolate food product called chocolate or semi-chocolate, before heating such as baking.

The present invention also provides (5) a heated (such as baked) complex food product on the surface of which at least a part of the oily food material according to the above (1) is exposed; (6) the food product according to the above (5) which is produced by combining an oily food material with a bakery product or a baked good; and (7) the food product according to the above (6) which is packed in a package.

### Effects of the Invention

An object of the present invention is to provide an oily food material having an advantage that when the oily food material is shaped into chips or chunks, combined with dough for baked goods or breads and then baked, the surface of the oily food material quickly solidifies after baking, and thereby the material does not stick to a bag even if the baked goods or breads are packed in bags immediately after baking.

### Best Mode for Carrying Out the Invention

An oily food material, as used herein, widely refers to food products containing fat and/or oil, and typically includes, but not limited to, chocolate-like food products.

A chocolate-like food product, as used herein, includes pure chocolate, "chocolate," and "semi-chocolate" defined by Japan Chocolate Fair Trade Council, and "chocolate-like food products" comprising fat and/or oil other than cocoa butter and edible substances other than cacao solid. The oily food material is a generic name for fat- and oil-based food products other than chocolate-like food products, such as curry- or cheese-flavored food products in which edible substances are dispersed in a fat or oil base.

Ingredients used for the oily food material are not particularly limited except that use of lecithin is restricted, and may be in accordance with known recipes. As an example, additives other than lecithin, milk constituents, sugars, fats and oils, and other edible substances may be suitably combined.

The additives include emulsifiers, anti-oxidants, flavors, and the like. The kinds and amounts of the additives excluding lecithin are not limited, and also the additives may not be added.

Lecithin is added in an amount as small as possible, for example not more than 0.2%, preferably not more than 0.1%, and most preferably, it is not added. As the amount of lecithin is decreased, however, the viscosity of the oily food material tends to increase or exhibit a viscous state so-called "increase in consistency". In such a case, an emulsifier having a viscosity-lowering effect may suitably be used from the viewpoint of workability. Such an emulsifier includes, but not limited to, sugar ester and polyglyceryl fatty acid ester. In particular, polyglycerol ester of condensed ricinoleic acid has a high effect of lowering viscosity.

In order to lower the viscosity, increasing the amount of oil components is also effective.

In an oily food material, about 2 to 3% of water may be dispersed. If the water content of an oily food material is decreased to not more than 0.6% by weight as a result of a step for improving flavor such as a conching step, hardly-drying property appears remarkably. The application of the present invention, however, can give more easily-drying property to an oily food material.

Milk constituents include dry whole milk, dried skim milk, butter milk powder, whey, whey powder, casein, casein sodium, lactalbumin, and the like.

Addition of milk constituents slightly contributes to improvement of the drying property immediately after baking, though the effect is not as high as the effect obtained by lowering the used amount of lecithin. A combination of addition of milk constituents and the present invention leads to acquisition of an oily food material with more quickly drying property after baking. Even a conventional composition containing no milk constituents, which can not quickly dry, can be given more easily drying property by applying the present invention.

The above-mentioned sugars are not particularly limited in kinds and amounts, and include, for example, glucose, fructose, sucrose, maltose, enzymatically saccharified starch syrup, lactose, reducing starch saccharified products, isomerized liquid sugar, sucrose binding starch syrup, oligosaccharide, reducing sugar polydextrose, sorbitol, reducing lactose, trehalose, xylose, xylitol, maltitol, erythritol, mannitol, fructooligosaccharide, soybean oligosaccharide, galactooligosaccharide, lactosucrose, raffinose, lactulose, palatinose oligosaccharide, stevia, aspartame, sugar alcohol, and the like. The sugars may be used alone or two or more of them may be used in combination.

Fats and/or oils contained in the oily food material include animal fats and oils, vegetable fats and oils, their hydrogenated fats and oils, mixtures thereof, and the fats and oils processed with various chemical or physical treatments. The fats and oils include, but not limited to, various animal fats and oils, and vegetable fats and oils, such as soybean oil, cotton oil, corn oil, safflower oil, olive oil, palm oil, canola oil, rice bran oil, sesame oil, kapok oil, cocoanut oil, palm kernel oil, cacao butter, milk fat, lard, fish oil, and whale oil, and their processed fats and oils such as hydrogenated fats and oils, fractionated fats and oils, interesterified fats and oils, and the like.

Additionally, the oily food material may contains various flavors and seasonings, such as cacao mass, cocoa powder, fruit powder, fruit juice powder, coffee powder, tea powder, curry powder and spices; and edible substances such as soy milk powder and starch.

The oily food material is prepared by a conventional method for preparing an oily food material. The oily food material thus obtained is usually plastic at the suitable temperature and capable of being easily formed.

The shape of the oily food material and a method for forming the shape are not particularly limited. When the oily food material is blended into dough for baked goods or breads, the oily food material may be in a shape formed by pouring it into a mold and then removing it from the mold, a shape formed by extruding it with a pastry tube, a cooled bar-shape, a chip-shape, a chunk-shape formed by cutting it into small pieces with a cutter, or the like. Pieces of the shaped oily food material are combined with dough for baked goods or breads by dispersion or embedding in the dough such that at least a part of the oily food material is exposed on the surface of the dough, and then the dough is subjected to a heating step. The heating means is typically baking in an oven and, however, may be microwave irradiation, infrared heating, or the like. The heating temperature intended in the present invention is not a temperature at which chocolate melts, for example 40° to 50°C, but 60°C or 70°C or more, usually above 100°C.

The compositions and preparation methods of baked goods and breads, and the like are not particularly limited.

Hereinafter, the present invention will be described in more detail by means of Examples, but the spirit of the present invention is not limited thereto. In Examples, all % and parts are by weight.

### <Example 1>

A chocolate material having a water content of 0.55% was prepared by refining and conching 40 parts of cacao mass, 53 parts of sugar, 7 parts of cocoa butter, and 0.05 part of vanilla flavor in the usual manner.

After the prepared chocolate material was subjected to tempering without adding lecithin thereto, the resulting material was shaped into chips each having a weight of 0.15 g, and the chips were cooled in a refrigerator to solidify.

Dough for a biscuit was prepared according to the recipe shown in Table 2. The chocolate chips were embedded into the biscuit dough such that the surfaces of the chocolate chips stuck out of the surface of the biscuit dough, which was baked on a baking sheet at 180°C for 10 minutes.

The surface of the chocolate chip was contacted with a spatula and observed immediately after baking (after 5 minutes). The result is shown in Table 1 together with the recipe.

### <Examples 2 and 3, Comparative Examples 1 and 2>

A chocolate material was prepared according to the same recipe and the same conditions as used in Example 1. To the chocolate material was added lecithin in an amount of 0.1 part (in Example 2), 0.2 part (in Example 3), 0.3 part (in Comparative Example 1) or 0.4 part (in Comparative Example 2), which was baked in the same manner as in Example 1. The resulting goods were observed in the same manner as in Example 1. The results are shown in Table 1 together with the recipes.

**Table 1 Recipe and Evaluation**

| | Example 1 | Example 2 | Example 3 | Comparative Example 1 | Comparative Example 2 |
|---|---|---|---|---|---|
| Cacao mass | 40 | 40 | 40 | 40 | 40 |
| Sugar | 53 | 53 | 53 | 53 | 53 |
| Cocoa butter | 7 | 7 | 7 | 7 | 7 |
| Vanilla flavor | 0.05 | 0.05 | 0.05 | 0.05 | 0.05 |
| Lecithin | 0.0 | 0.1 | 0.2 | 0.3 | 0.4 |
| Surface immediately after baking | Surface solidified by heat and was not sticky. | Surface solidified by heat and was not sticky. | Surface solidified by heat and was not sticky. | Surface was a little sticky. | The whole surface remained in a melted state. |

| | | | | | |
|---|---|---|---|---|---|
| * All water contents were adjusted to 0.55%. | | | | | |

**Table 2 Biscuit dough (the same recipe among Examples 1, 2 and 3, and Comparative Examples 1 and 2)**

| | |
|---|---|
| Shortening | 30 |
| Margarine | 20 |
| White superior soft sugar | 40 |
| Whole egg | 16 |
| Soft flour | 100 |
| Vanilla flavor | 0.1 |

| | |
|---|---|
| * Shortening ("PANPASU LB" manufactured by FUJIOIL CO., Ltd. was used.) | |
| * Margarine ("NEW CONBOL 500" manufactured by FUJIOIL CO., Ltd. was used.) | |

As shown in the above-mentioned results, it was difficult for the chocolates to which not less than 0.3 part of lecithin was added to solidify immediately after baking, whereas the chocolates to which not more than 0.2 part of lecithin was added solidified immediately after baking.

In this recipe, part and % are almost equivalent, and the addition amount of lecithin can be considered as the content because lecithin is almost not present in the other ingredients including cacao mass.

### <Examples 4 and 5, Comparative Example 3>

In order to correct a difference in viscosity caused by a difference in the addition amount of lecithin, chocolate materials having almost the same viscosity were prepared by changing the oil contents, and their drying properties were compared.

The recipes were as shown in the following Table 3. Lecithin was not added in Example 4, and was added in an amount of 0.1 part in Example 5 and in an amount of 0.5 part in Comparative Example 3. For the other ingredients, the same amount of cacao mass was added in all Examples, and their viscosities were adjusted to 350-400 poises by changing the addition amounts of sugar and cocoa butter. The baking and observation were performed in the same manner as in Example 1. The results were shown in Table 3 together with the recipes.

**Table 3 Recipe and Evaluation**

| | Example 4 | Example 5 | Comparative Example 3 |
|---|---|---|---|
| Cacao mass | 40 | 40 | 40 |
| Sugar | 36 | 37 | 53 |
| Cocoa butter | 14 | 13 | 7 |
| Vanilla flavor | 0.05 | 0.05 | 0.05 |
| Lecithin | 0.0 | 0.1 | 0.5 |
| Oil (%) | 36.0 | 35.0 | 29.0 |
| Surface immediately after baking | Surface solidified by heat and was not sticky. | Surface solidified by heat and was not sticky. | The whole surface remained in a melted state. |

As shown in the above-mentioned results, even if the viscosity was controlled by increasing the oil content and the addition amount of lecithin was decreased, the chocolate of Example 4 to which lecithin was not added and the chocolate of Example 5 to which 0.1 part of lecithin was added solidified immediately after baking. On the other hand, the chocolate of Comparative Example 3 to which 0.5 part of lecithin was added hardly solidified immediately after baking, and its surface was sticky.

### <Example 6, Comparative Example 3>

Chocolate materials in which an increase of viscosity caused by decreasing the addition amount of lecithin was controlled by adding another emulsifier were prepared, and their drying properties were compared.

The recipes were as shown in Table 4. In Example 6, 0.1 part of lecithin and 0.2 part of polyglycerol condensed ricinoleic acid ester (SY Glyster CRS75 manufactured by Sakamoto Yakuhin Kogyo Co., Ltd.) were used, and its viscosity was adjusted to almost the same (350-400 poises) as that in Comparative Example 3 wherein 0.5 part of lecithin was added. The baking was performed in the same operating conditions as in Example 1. The obtained baked goods were wrapped in packages and the degree of stickiness was observed. The results are shown in Table 4 together with the recipes.

**Table 4 Recipe and Evaluation**

| | Example 6 | Comparative Example 3 |
|---|---|---|
| Cacao mass | 40 | 40 |
| Sugar | 53 | 53 |
| Cocoa butter | 7 | 7 |
| Vanilla flavor | 0.05 | 0.05 |
| Lecithin | 0.1 | 0.5 |
| CRS 75 | 0.2 | 0.0 |
| Oil (%) | 29.0 | 29.0 |
| Surface immediately after baking | Surface solidified by heat and did not stick. | The whole surface was melted and stuck to the packages. |

As shown in the above-mentioned results, when the viscosity was controlled mainly by using polyglyceryl condensed ricinoleic acid ester and the addition amount of lecithin was decreased, the obtained chocolate solidified immediately after baking. Biscuits are usually allowed to stand for about 30 minutes after baking and then packed because they get moist if they are packed immediately after baking. However, the chocolate of the Example did not stick to the packages not only after 30 minutes but also immediately after baking.

On the other hand, it was difficult for the chocolate of Comparative Example 3 containing 0.5 part of lecithin to solidify immediately after baking, and the surface was sticky. When the chocolate was packed after allowed to stand for 30 minutes, it stuck to the package.

### <Examples 4 and 5, Comparative Examples 3, 4, 5 and 6>

The water contents in chocolate materials were controlled, and their drying properties were compared.

The recipes were as shown in Table 5. In Examples 4 and 5 and Comparative Example 3, the water contents were all 0.55% and the viscosities were controlled by changing the oil contents. The chocolate materials of Comparative Examples 4, 5 and 6 were in accordance with the same recipes as the above except that the water contents were adjusted to 1.15%. The water contents were controlled by adjusting the conching temperature and time. (When the conching temperature or time is higher or longer, water more easily disperses into the air and thereby the water content in the material decreases. Water originally present in the ingredients and water absorbed during proceeding steps give a water content of about 2 to 3% to the resulting material even if water is not added thereto. When the water content becomes higher, a phenomenon called "increase in consistency" occurs and the viscosity increases.)

**Table 5 Recipe and Evaluation**

| | Example 4 | Example 5 | Comparative Example 3 | Comparative Example 4 | Comparative Example 5 | Comparative Example 6 |
|---|---|---|---|---|---|---|
| Cacao mass | 40 | 40 | 40 | 40 | 40 | 40 |
| Sugar | 36 | 37 | 53 | 36 | 37 | 53 |
| Cocoa butter | 14 | 13 | 7 | 14 | 13 | 7 |
| Vanilla flavor | 0.05 | 0.05 | 0.05 | 0.05 | 0.05 | 0.05 |
| Lecithin | 0.0 | 0.1 | 0.5 | 0.0 | 0.1 | 0.5 |
| Water content (%) | 0.55 | 0.55 | 0.55 | 1.15 | 1.15 | 1.15 |
| Surface immediately after baking | Surface solidified and was not sticky. | Surface solidified and was not sticky. | The whole surface remained in a melted state. | Surface solidified and was not sticky. | Surface solidified and was not sticky. | Surface solidified and was not sticky. |

As shown in the results of Comparative Examples 4, 5 and 6, when the water content in the chocolate material was as high as 1.15%, the chocolate solidified by heating and was not sticky, but the flavor was not satisfied because of lack of conching.

On the other hand, as shown in Comparative Example 3, when conching was fully conducted and the water content was decreased to 0.55%, the addition of 0.5 part of lecithin gave the undried surface, that is, remarkably spoiled the commercial value.

Even if the water content was lower, however, as shown in Examples 4 and 5, a chocolate having as good drying property as that of a chocolate having a higher water content could be obtained by decreasing the addition amount of lecithin, and moreover the obtained chocolate also attained satisfied flavor by conching.

## Claims

1. An oily food material for heating including baking which contains not more than 0.2% by weight of lecithin.

2. The oily food material according to Claim 1, wherein the material had a water content of not more than 0.6% by weight at a stage before heating including baking.

3. The oily food material according to Claim 1, which comprises fat and/or oil and sugar as essential components.

4. The oily food material according to Claim 1, wherein before heating including baking, the material is a chocolate-like food product.

5. A complex food product after heating including baking, on the surface of which at least a part of the oily food material according to Claim 1 is exposed.

6. The food product according to Claim 5, which is produced by combining an oily food material with a bakery product or a baked good.

7. The food product according to Claim 6, which is packed in a package.
